# EUROPÄISCHE PATENTSCHRIFT

(11) **EP 1 712 458 B1**
(45) Veröffentlichungstag und Bekanntmachung des Hinweises auf die Patenterteilung: **07.11.2007**
(21) Anmeldenummer: 06075863.8
(22) Anmeldetag: 11.04.2006
(51) Int. Cl.: B62J 11/00

(54) **Einheit versehen mit einem Fahrradschloss**
Bicycle lock system
Unité réalisée avec un antivol de bicyclette

(30) Priorität: 13.04.2005 NL 1028758
(43) Veröffentlichungstag der Anmeldung: 18.10.2006
(73) Patentinhaber: STENMAN HOLLAND B.V., 3903 AV Veenendaal (NL)
(72) Erfinder: Bol, Jurriaan Gerrit, 6905 JS Zevenaar (NL)
(74) Vertreter: van Loon, C.J.J.

(56) Entgegenhaltungen:
- EP-A- 1 182 123
- DE-A1- 10 309 599
- US-A- 2 405 913
- US-A- 2 408 347
- US-A- 2 604 098
- US-A- 4 919 374

## Beschreibung

Die Erfindung bezieht sich auf ein System, aufweisend ein Fahrradschloss und Befestigungsmittel zur Befestigung des Fahrradschlosses mit einem Fahrradrahmen, wobei die Befestigungsmittel wenigstens ein flexibles Spannelement umfassen, wobei die Befestigungsmittel Spannmittel zum Spannen des genannten Spannelements aufweisen, insbesondere zur Verkleinerung einer durch das Spannelement gebildeten Schlaufe, wobei die Spannmittel eine drehbare Spannachse aufweisen, an der ein genanntes Spannelement derart gekoppelt werden kann, dass das Spannelement unter Einfluss der Rotation der Spannachse unter Spannung gesetzt werden kann, wobei die Spannachse eine Verzahnung aufweist.

In der europäischen Patentanmeldung EP 1 182 123 A2, die alle Merkmale des Oberbegriffs des Anspruchs 1 offenbart, ist ein Halter zur Kopplung funktioneller Elemente an Stangen, beispielsweise eines Zweirads beschrieben. Der Halter findet beispielsweise zur Kopplung eines Schlosshalters an einem Zweirad Einsatz. Der bekannte Halter weist ein flexibles Bandelement auf, das mit Hilfe eines Rotationselements (auch zu bezeichnen als Drehelement) unter Spannung gesetzt werden kann. Das Rotationselement ist aus Zink hergestellt. Das Rotationselement weist Nuten und Nocken auf, die mit Nuten und Nocken eines Gehäuses zur Verhinderung des rückwärts Drehens des Rotationselements zusammenwirken können. Außerdem weist das Rotationselement des bekannten Halters eine sechskantförmige Vertiefung zur Verwendung eines Inbusschlüssels zur Betätigung des Rotationselements auf. Damit erhält ein solcher Halter den Vorteil, dass der Halter mit Stangen unterschiedlicher Durchmesser gekoppelt werden kann.

Ein Nachteil des bekannten Systems ist dadurch gegeben, dass der Halter vergleichsweise teuer ist und vergleichsweise viel Raum beansprucht. Außerdem ist relativ viel Kraft und ein großes Drehmoment, das auf das Rotationselement aus zu üben ist um das Bandelement vollständig unter Spannung zu setzen, erforderlich. Zudem, falls das Bandelement bereits einigermaßen unter Spannung gesetzt wurde, zieht das Bandelement das Rotationselement bereits in die Verzahnung / in die Nuten des Halters. Dadurch kann das weitere Festdrehen des Rotationselements lediglich schrittweise erfolgen, sodass die Kraft zur Befestigung schwierig zu bestimmen ist und eine genaue Einstellung der Kraft zur Befestigung nicht möglich ist. Außerdem wird das weitere Festdrehen des Rotationselements dadurch in immer erschwerter Weise behindert oder sogar gänzlich unmöglich gemacht. Deshalb ist der bekannte Halter zur festen und unbeweglichen Kopplung eines Fahrradschlosses an einem Fahrradrahmen nicht geeignet, sodass nach dem Zusammenbau / Montage noch ein gewisser Spielraum des Fahrradschlosses relativ zum Fahrradrahmen vorhanden sein kann oder künftig entstehen kann. Ein solcher Bewegungsspielraum kann zu einer Beschädigung beispielsweise der Lackschicht des Fahrradrahmens führen, beispielsweise unter Einfluss von Reibung oder dergleichen.

Es ist Aufgabe der vorliegenden Erfindung wie beansprucht in unabhängigen Ansprüchen 1 und 24, eine Verbesserung des hier oben genannten Systems zu erzielen. Insbesondere ist es Aufgabe der Erfindung ein System zu schaffen, das ein Fahrradschloss und Befestigungsmittel zur Befestigung des Fahrradschlosses an einem Fahrradrahmen aufweist, wobei das Fahrradschloss vorzugsweise kraftvoll beziehungsweise wirksam an Rahmenabschnitten unterschiedlicher Abmessungen gekoppelt werden kann, während das System vergleichsweise preiswert, kompakt und dauerhaft stabil ausgebildet werden kann.

Dazu ist vorgesehen, dass das System gemäß der Erfindung dadurch gekennzeichnet ist, dass die Spannmittel ein zu betätigendes Schraubelement aufweisen, das zwecks Rotation der Spannachse in die Verzahnung der genannten Spannachse eingreift.

Auf diese Weise kann das Fahrradschloss wirksam an einem oder mehreren Rahmenabschnitten eines Zweirads gekoppelt werden, beispielsweise an den Rahmenröhren unterschiedlicher Durchmesser. Außerdem kann das System auf diese Weise vergleichsweise preiswert, kompakt und dauerhaft ausgebildet werden. Das Fahrradschloss ist beispielsweise ein Ringschloss oder ein anderer Typ eines Schlosses. Die Verzahnung auf der Spannachse und / oder das damit zusammenwirkende Schraubelement können derart ausgebildet sein, dass die Spannachse damit stufenlos gedreht werden kann, sodass auch das Spannelement stufenlos unter Spannung gesetzt werden kann und eine mit Hilfe dieses Spannelements auf den diesbezüglichen Rahmenabschnitt ausgeübte Kraft zur Befestigung genau eingestellt werden kann. Das Schraubelement kann auf unterschiedliche Art und Weise ausgebildet sein, beispielsweise eine Schraube oder eine Schnecke (in der niederländischen Sprache als "worm" bezeichnet) umfassen, wobei das Schraubgewinde beziehungsweise eine helixförmige Nut an die Verzahnung der Spannachse angreift.

In einer Ausbildung der Erfindung erstreckt sich eine Rotationsachse des genannten Schraubelements quer zu einer Rotationsachse der Spannachse, auf die das Schraubelement einwirkt. Somit kann auf einfache Art und Weise eine selbst-sichernde Wirkung während des Einsatzes erhalten werden.

Während des Einsatzes kann das Fahrradschloss an dem Fahrradrahmen befestigt werden, insbesondere unter Einsatz des wenigstens einen flexiblen Spannelements. Das Spannelement wird einfach unter Spannung gesetzt beziehungsweise angespannt und gesichert durch Betätigung des Schraubelements, das auf die Verzahnung der mit dem Spannelement gekoppelten Spannachse angreift. Das Schraubelement kann sowohl wirkungsvoll als auch stufenlos die Spannung des Spannelements bewirken, wie auch eine automatische Sicherung der Spannachse und des damit gekoppelten Spannelements.

Es sei erwähnt, dass US 2,408,347 und US 2,405,913 jeweils sich lediglich beziehen auf eine rohr- /schlauchförmige Klemme jedoch kein Fahrradschloss beschrieben wird. Bei einer solchen Klemme / Klammer ist vorgesehen, dass ein gummiförmiger Schlauch, der von sich aus als flexibles Material gebildet ist, wasserdicht auf einem Rohr zusammengedrückt wird und ist dazu in sich geschlossen zum vollständigen Umgeben eines zusammen zu drückenden Gegenstands. In der Druckschrift DE 103 09 599 wird lediglich ein Fahrradschloss beschrieben, das zwei große Aussparungen aufweist zum Erhalt von zwei positionierbaren Stützabschnitten, in denen Befestigungsschrauben vorgesehen sind, damit die Position des Schlosses in zwei orthogonalen Richtungen angepasst werden kann. Die Stützabschnitte werden mit Hilfe von (steifen) Befestigungsschrauben an separaten Stützbalken des Fahrrads befestigt.

Gemäß einer weiteren Ausbildung der Erfindung weist ein System ein Fahrradschloss und Befestigungsmittel zur Befestigung des Fahrradschlosses an wenigstens zwei sich im Abstand zueinander erstreckenden Rahmenabschnitten eines Fahrradrahmens auf, wobei die Befestigungsmittel wenigstens zwei flexible Spannelemente umfassen, die jeweils nach der Montage an einem genannten Rahmenabschnitt angreifen, wobei die Befestigungsmittel Spannmittel aufweisen, mit denen die genannten Spannelemente unter Spannung gesetzt werden können, insbesondere zur Verkleinerung einer von jedem Spannelement gebildeten Schlaufe (auch zu bezeichnen als Schlinge, in der niederländischen Sprache mit "lus" angegeben). Somit kann das Fahrradschloss vergleichsweise stabil, dauerhaft und einfach an dem Fahrradrahmen befestigt werden.

Gemäß einer weiteren Ausbildung der Erfindung weist das System ein Fahrradschloss und Befestigungsmittel zur Befestigung des Fahrradschlosses an einem Fahrradrahmen auf, wobei die Befestigungsmittel wenigstens ein flexibles Spannelement umfassen, wobei die Befestigungsmittel Spannmittel, zum Spannen der genannten Spannelemente aufweisen, insbesondere zur Verkleinerung einer vom Spannelement gebildeten Schlaufe, wobei das Schloss ein Fahrradschloss des Ringschlosstyps ist. Durch Anwendung des wenigstens einen flexiblen Spannelements, und vorzugsweise wenigstens zwei solcher Spannelemente, kann das Ringschloss außergewöhnlich schnell und einfach an beispielsweise einer Gabel eines Fahrradrahmens montiert werden. Ein schneller Abbau, beispielsweise zwecks Wartungsarbeiten ist ebenfalls möglich. Dazu kann das flexible Spannelement beispielsweise durchgeschnitten werden.

Die Erfindung sieht weiterhin ein Fahrrad vor, das wenigstens ein System gemäß einem der vorangegangenen Ansprüche aufweist, wobei das Fahrradschloss des Systems mit Hilfe des wenigstens eine genannten Spannelements mit einem Fahrradrahmen des Fahrrads verbunden ist. Dies führt zu den hier oben genannten Vorteilen. Beispielsweise kann durch Einsatz des Schraubelements in Kombination mit der Spannachse und dem Spannelement das Schloss unbeweglich oder nahezu unbeweglich mit dem Fahrradrahmen derart verbunden werden, dass eine Beschädigung des Rahmens vermieden werden kann.

Gemäß einer weiteren Ausgestaltung der Erfindung ist das Fahrradschloss mit Hilfe von wenigstens zwei Spannelementen an beiden Beinen einer Gabel des Fahrrads verbunden.

In einer weiteren Ausgestaltung der Erfindung sind Befestigungsmittel mit einem System gemäß der Erfindung vorgesehen, wobei die Befestigungsmittel spezifisch ausgebildet sind zur Befestigung des Fahrradschlosses an dem Fahrradrahmen. Dies führt zu den hier oben genannten Vorteilen. Die Befestigungsmittel können beispielsweise separat und unabhängig vom Fahrradschloss oder in Kombination mit diesem Fahrradschloss geliefert werden.

Weitere Ausführungsformen der Erfindung sind beschrieben in den Unteransprüchen. Jetzt wird die Erfindung erläutert an Hand eines Ausführungsbeispiels und der Zeichnung. Darin ist gezeigt:
- Fig. 1: eine perspektivische Vorderansicht des erfindungsgemäßen Systems;
- Fig. 2: eine perspektivische Rückansicht des in der Figur 1 dargestellten Systems;
- Fig. 3: eine Vorderansicht des in der Figur 1 dargestellten Systems;
- Fig. 4: Eine Ansicht im Querschnitt entlang der Linie A-A gemäß Figur 3;
- Fig. 5: eine perspektivische Vorderansicht der Befestigungsmittel gemäß dem in der Figur 1 dargestellten System in einem zerlegten Zustand;
- Fig. 6: eine perspektivischere Rückansicht der Befestigungsmittel gemäß dem in der Figur 1 dargestellten System;

- Fig. 7: eine Vorderansicht der Befestigungsmittel gemäß dem in der Figur 1 dargestellten System;
- Fig. 8: eine Rückansicht der in der Figur 7 dargestellten Befestigungsmittel;
- Fig. 9: eine Seitenansicht der in der Figur 7 dargestellten Befestigungsmittel;
- Fig. 10: eine Unteransicht der in der Figur 7 dargestellten Befestigungsmittel;
- Fig. 11: eine Ansicht im Querschnitt entlang der Linie D-D der Figur 7;
- Fig. 12: eine Ansicht im Querschnitt entlang der Linie E-E der Figur 7;
- Fig. 13: eine Ansicht im Querschnitt entlang der Linie C-C der Figur 9; und
- Fig. 14: eine Ansicht im Querschnitt gemäß Figur 11 mit alternativen Befestigungsmitteln, insbesondere ein alternatives Schraubelement.

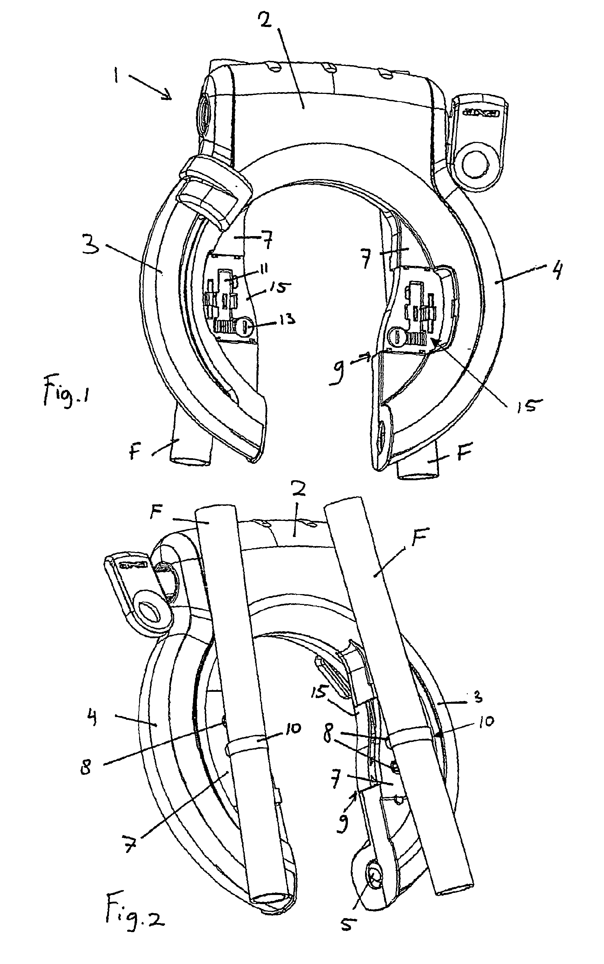

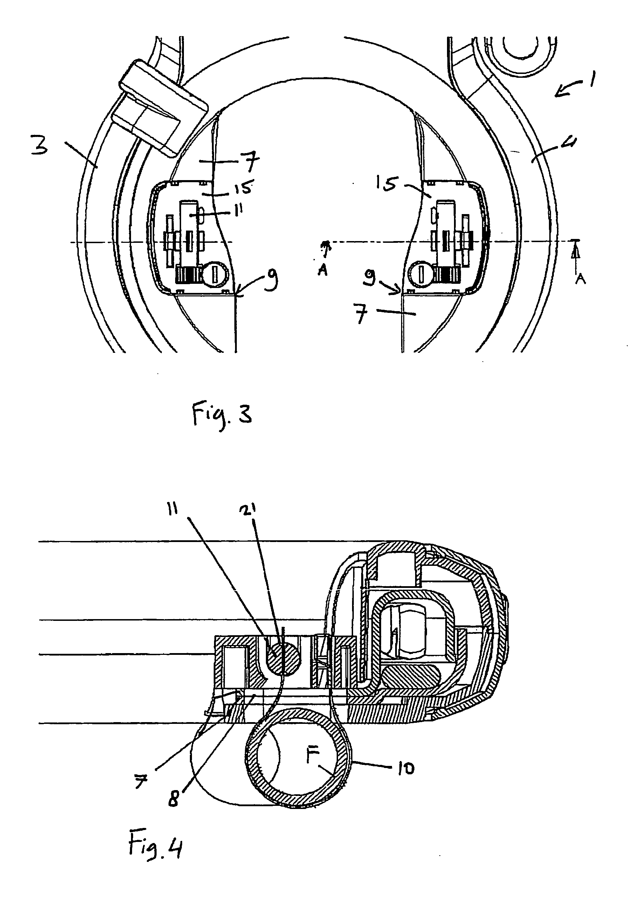

In den Figuren 1 bis 4 ist ein aufgebautes System gemäß einer Ausführungsform der Erfindung gezeigt, aufweisend ein Fahrradschloss 1 und Befestigungsmittel 10, 11, 12, 13, 15 zur Befestigung des Fahrradschlosses 1 unmittelbar an dem Fahrradrahmen, beispielsweise an Rahmenröhren F. Das Fahrradschloss kann unterschiedliche Typen von Schlössern umfassen, beispielsweise ein an sich aus der Praxis bekanntes Ringschloss oder ein anderer Schlosstyp. In dem vorliegenden Ausführungsbeispiel umfasst das Fahrradschloss ein Ringschloss, das ein Gehäuse 2 mit zwei gekrümmten Beinen 3, 4 aufweist, die einen Riegelführungsraum umgeben, und ein zur Betätigung vorgesehener Riegelbügel, der aus dem Riegelführungsraum geschoben werden kann und in umgekehrter Richtung zwecks Blockierung einer Sperraussparung beziehungsweise zwecks ihrer Freigabe. Das Schloss 1 weist längliche Flansche 7 auf, die sich einander gegenüberstehend entlang zu einander gerichteter Seiten der gekrümmten Beine 3, 4 erstrecken. In dem Ausführungsbeispiel weist der jeweilige längliche Flansch 7 drei parallele Langlöcher (oder Schlitzöffnungen, (in der niederländischen Sprache als "slobgat", in der englischen Sprache als "slotted hole" bezeichnet), die zum Teil gerade noch teilweise sichtbar sind in der Figur 2 und diesbezüglich ein Exemplar sichtbar ist in der Ansicht im Querschnitt gemäß Figur 4. Die Langlöcher können beispielsweise Schraublöcher / Bolzenöffnungen umfassen, die vorher eingesetzt wurden um ein solches Schloss 1 an dem Fahrradrahmen fest zu schrauben. In dem vorliegenden Ausführungsbeispiel werden diese Langlöcher auf eine andere vorteilhafte Art eingesetzt, wie nachfolgend erläutert wird.

Ein anderer Schlosstyp, der beispielsweise innerhalb des Rahmens der Erfindung eingesetzt werden kann, ist beispielsweise ein Schloss, das einen Halterabschnitt und einen drehbaren, mit dem Halterabschnitt verbundenen Schlossstift aufweist, und einen Aufnahmeabschnitt mit einer Schlossstiftöffnung zur Aufnahme eines freien Endes des Schlossstiftes in einem geschlossenen Zustand des Schlosses aufweist. In dem Falle können beispielsweise sowohl der Halterabschnitt als auch der Aufnahmeabschnitt mit Hilfe der Befestigungsmittel an einem Fahrradrahmen, beispielsweise an den Beinen einer Fahrradgabel, befestigt werden. Außerdem kann das Schloss beispielsweise ein Bügelschloss, ein Kabelschloss oder ein anderes Fahrradschloss umfassen.

Das in den Figuren 1 bis 4 dargestellte Schloss 1 ist konfiguriert zum Blockieren eines Laufrades eines Fahrrads, zumindest wenn sich das Schloss in dem mit Hilfe der Befestigungsmittel an dem Fahrradrahmen F montierten Zustand befindet. In dem Ausführungsbeispiel ist das Schloss an zwei, sich zueinander erstreckenden Rahmenabschnitten F des Fahrradrahmens gekoppelt. Dadurch kann das Schloss 1 relativ stabil und zumindest an zwei verschiedenen Positionen, mit Hilfe des Fahrradrahmens und der Befestigungsmittel 10-15 festgehalten werden. Insbesondere umfassen diese Rahmenabschnitte F die Beine einer Gabel eines Fahrrads, wobei das nicht dargestellte Laufrad zwischen diesen Beinen hineinragt. In diesem Fall kann der Riegelbügel des Schlosses 1 eine Blockierung des Laufrades verursachen, nachdem ein Teil dieses Riegelbügels aus dem Riegelführungsraum und in die Sperraussparung geschoben wurde.

In dem vorliegenden Ausführungsbeispiel weisen die genannten länglichen Flansche 7 des Schlosses 1 jeweils einen Satz der genannten Befestigungsmittel 10, 11, 12, 13, 15 auf. Die Befestigungsmittel umfassen flexible Spannelemente 10. Wie in den Figuren 2 und 4 dargestellt, bildet jedes flexible Spannelement 10 nach dem Zusammenbau eine Schlaufe um den Fahrradrahmenabschnitt F herum. Die Befestigungsmittel umfassen Spannmittel 11, 12, 13 zum Spannen der Spannelemente 10, insbesondere zur Verkleinerung der von dem jeweiligen Spannelement 10 gebildeten Schlaufe. Nach der Montage greifen die Befestigungsmittel 10 bis 15 an die zwei längliche Flansche 7 des Schlosses 1 an und wird das Schloss 1 - nach dem auf Spannung legen der Spannelemente 10 - fest gegen die zwei Fahrradrahmenabschnitte F gedrückt. Aus den Figuren ist klar ersichtlich, dass die von dem flexiblen Spannelement 10 gebildete Schlaufe vorzugsweise eine nicht in sich geschlossene Schlaufe umfasst, dies im Gegensatz zu beispielsweise Schlauchklemmen. Im Ausführungsbeispiel sind die Enden der mit Hilfe des Spannelementes gebildeten Schlaufe beispielsweise im Abstand zueinander angeordnet. Somit kann eine stabile Befestigung erhalten werden. Außerdem ergibt sich aus der Zeichnung, dass das Ausführungsbeispiel derart ausgebildet ist, dass ein Rahmenabschnitt F nach der Montage nicht vollständig von einem Spannelement 10 (siehe Figur 4) umgeben wird, jedoch lediglich zum Teil von dem Spannelement umgriffen wird, jedenfalls beobachtet in Umfangsrichtung des Rahmenabschnittes F. Das Spannelement 10 nach der Montage beispielsweise im Wesentlichen U-förmig oder Omega(Q)-förmig, wie in der Zeichnung dargestellt.

Die flexiblen Spannelemente 10 können auf verschiedene Art und Weise ausgebildet sein, und beispielsweise relativ dünne, längliche Spannbänder, Spannstreifen oder dergleichen umfassen. Während des Einsatzes des Schlosses 1 können vergleichsweise große Entriegelungsmomente auf das Schloss 1 ausgebildet werden, insbesondere während der Öffnung des Schlosses 1. Gemäß der Erfindung sind die Spannelemente 10 vorzugsweise wenigstens aus einem kriechunempfindlichen und dehnungsunempfindlichen Material hergestellt, wie beispielsweise aus einem Metall, Legierung oder rostfreiem Stahl und / oder dergleichen, derart dass jedes Spannelement in angespanntem Zustand nahezu oder gar keinen Schrumpfung oder Dehnung empfindet. Somit können die Spannelemente 10 das Schloss während eines vergleichsweise langen Einsatzzeitraums fest und unbeweglich an dem Rahmen F koppeln. Somit kann erfolgreich verhindert werden, dass der Rahmen F beschädigt wird, beispielsweise in Folge einer Verschiebung des Schlosses 1 entlang des Rahmens F.

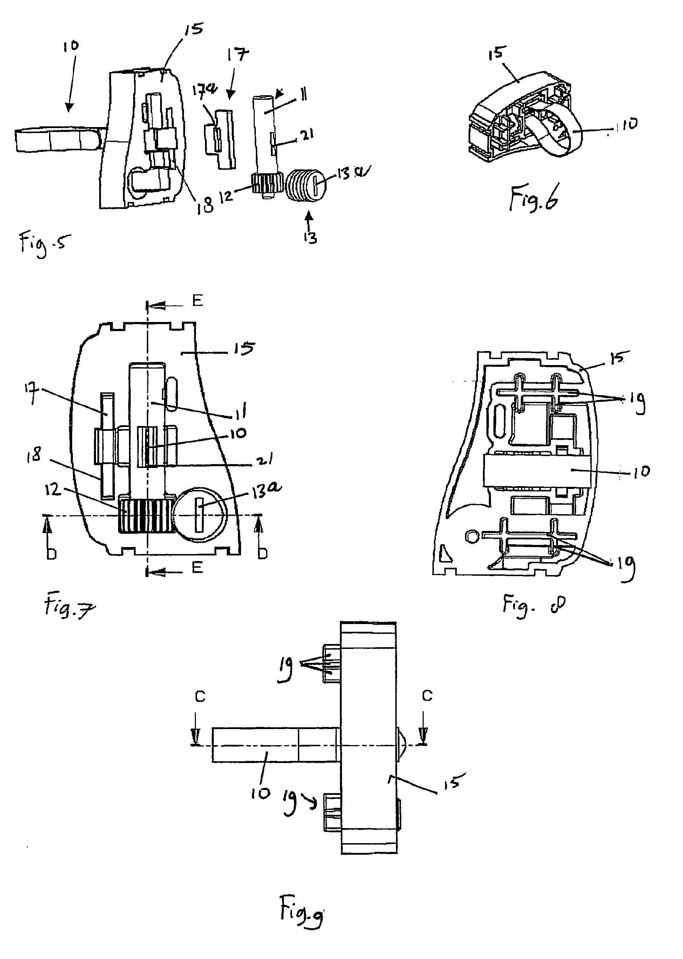

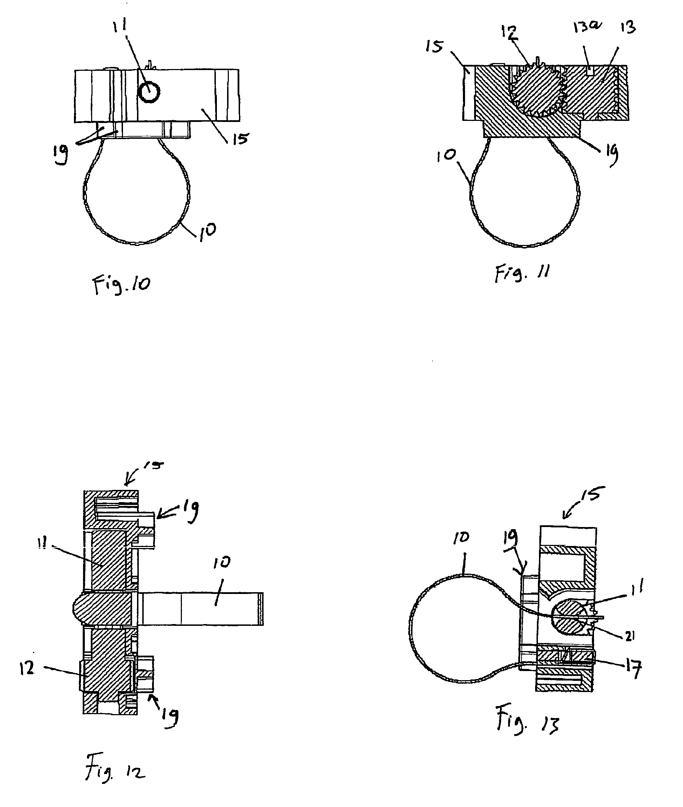

In den Figuren 5 bis 13 sind die Befestigungsmittel detailliert gezeigt. Die Befestigungsmittel des Ausführungsbeispiels weisen zwei Spannmittelhalter 15 auf, die die genannten Spannmittel 11, 12, 13 halten. Nach der Montage befindet sich jeder Spannmittelhalter 15 auf einer vom Fahrradrahmen F abgewandten Seite eines länglichen Flansches 7 des Schlosses 1.

In dem Ausführungsbeispiel ist jeweils ein Langloch vorgesehen um ein genanntes Spannelement 10 ausgehend von dem Spannmittelhalter 15 zum Fahrradrahmen F in Richtung oder erneut wieder zurück zu führen, siehe Figur 4. Außerdem weist der Spannmittelhalter 15 vorzugsweise Nocken 19 auf, die mit relativ wenig Spiel in den beiden anderen Langlöchern des jeweiligen länglichen Flansches 7 passen können. Diese Nocken 19 können beispielsweise eine Klick-Verbindung mit dem Schloss 1 erzeugen, was jedoch nicht notwendig ist.

Vorzugsweise weist jeder längliche Flansch 7 des Schlosses 1 eine Aussparung oder eine Vertiefung 9 auf, in der ein genannter Spannmittelhalter 15 mit relativ wenig Spielraum oder wenigstens einigermaßen versenkt angeordnet werden kann. Somit kann jeder Spannmittelhalter 15 die Bewegungsfreiheit des Schlosses 1 nach der Montage weiter einschränken. Außerdem kann jeder Spannmittelhalter 15 auf diese Art und Weise, soweit es die Formgebung betrifft, gut an dem Schloss 1 anschließen, was aus ästhetischen Gesichtpunkten vorteilhaft ist. In dem vorliegenden Ausführungsbeispiel bilden die Spannmittelhalter 15 separate Teile. Alternativ kann das Schloss 1 beispielsweise solche Spannmittelhalter 15 integriert aufnehmen. Jeder Spannmittelhalter 15 kann beispielsweise aus einem Stück mit einem Abschnitt des Schlosses 1 hergestellt sein oder mit dem Schloss 1 verklebt sein oder dergleichen. Außerdem kann jeder Spannmittelhalter 15 aus unterschiedlichen Materialien hergestellt sein, beispielsweise preiswert und dauerhaft aus Kunststoff oder aus Metall oder einer Legierung oder aus einem anderen Material.

Vorzugsweise sind die Spannmittel 11, 12, 13 selbstsichernd ausgebildet. In dem Ausführungsbeispiel weisen die genannten Spannmittel drehbare Spannachsen 11 auf, womit die genannten Spannelemente 10 gekoppelt werden können. Jede Spannachse 11 weist einen Schlitz 21 auf, damit ein erstes Ende des jeweiligen Spannelementes 10 durchgeführt werden kann. Ein zweites, umgesetztes Ende des Spannelementes 10 ist nach der Montage an einem Halterschlitz 17a einer Halterlippe 17 gekoppelt, die in einem Schlitz 18 des Spannmittelhalters 15 aufgenommen werden kann.

Jedes Spannelement 10 kann während der Montage einfach unter Spannung gesetzt werden mit Hilfe der Rotation der zugehörigen Spannachse 11, damit die von dem Spannelement 10 gebildete (im Wesentlichen U-förmige) Schlaufe verkleinert wird und das Schloss 1 stabil an den Fahrradrahmen F gedrückt wird. Dazu weist jede Spannachse 11 an einer Stirnseite eine Verzahnung 12 auf, beispielsweise ein Schneckenradverzahnung oder dergleichen. Außerdem weisen die Spannmittel betätigbare Schraubelemente 13 auf. In dem Ausführungsbeispiel sind die Schraubelemente 13 jeweils einfach als eine Schnecke ausgebildet, wobei diese Schnecke eine helixförmige Nut aufweist. Wie sich aus den Figuren ergibt, ist eine virtuelle Rotationsachse eines jeden der genannten Schraubelemente 13 im Wesentlichen parallel zu einer virtuellen Rotationsachse, um die der Sperrbügel / Riegelbügel des Ringschlosses 1 während des Gebrauchs geschoben werden kann. Die Spannachsen 11 erstrecken sich senkrecht zu diesen virtuellen Rotationsachsen und im Wesentlichen parallel zu den länglichen Flanschen 7 des Schlosses 1.

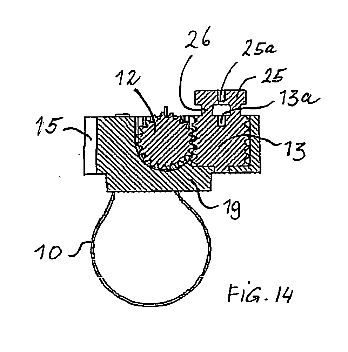

Jedes Schraubelement 13 greift mit der helixförmigen Nut an die Verzahnung 12 der Spannachse 11 derart an, dass die Rotation des Schraubelements 13 eine Rotation der Spannachse 11 zur Folge hat. In einer einfachen Ausbildung der Erfindung weist ein Stirnende eines jeden Schraubelements 13 einen mit Hilfe eines Werkzeugs zu betätigenden (Betätigungs-)abschnitt 13a auf, umfassend beispielsweise eine mit Hilfe eines Werkzeugs zur Mitnahme vorgesehene Betätigungsaussparung 13a (siehe Figuren) zur Betätigung des Schraubelements 13. Die Schraubelemente 13 sind somit jeweils als eine Schraube zur Betätigung ausgebildet. Das genannte Werkzeug kann beispielsweise einen Schraubendreher, einen Inbusschlüssel oder ein anderes geeignetes Werkzeug beinhalten, abhängig von der Ausbildung des genannten Betätigungsabschnitts 13a. In einer weiteren Ausbildung kann dieses Betätigungsteil des Schraubelements 13 außer oder an stelle des hier oben beschriebenen Betätigungsabschnitts 13a einen zusätzlichen Betätigungsabschnitt 25 umfassen, der über wenigstens eine abbrechbare Brücke 27 oder einen abbrechbaren Stift 27 verbunden ist mit dem Stirnende (in der niederländischen Sprache als "kops einde" bezeichnet) des Schraubelements 13 wie gezeigt in der Figur 14. Dieser zusätzliche Betätigungsabschnitt 25 kann soweit erwünscht einen ähnlichen Betätigungsabschnitt 25a aufweisen wie das Stirnende des Schraubelements 13, geeignet zum Mitnehmen /Angreifen mit Hilfe eines Werkzeugs.

Bei dieser Ausführungsform werden die Verbindungsbrücken 26 abbrechen beziehungsweise zerbrechen, wenn beim Anziehen des Schraubelements 13 eine bestimmte Kraft zur Befestigung erzielt oder überschritten wird. Der zusätzliche Betätigungsabschnitt 25 bildet somit eine Art eines Kraftbegrenzers, der dafür sorgt, dass das Spannelement 10 nicht all zu fest angespannt werden kann, sodass ein Schaden an dem Rahmenabschnitt und / oder an den Befestigungsmitteln selbst, insbesondere dem Schraubelement 13 und dem Betätigungsabschnitt 13a vermieden werden kann. Indem das Schraubelement 13 außerdem einen Betätigungsabschnitt 13a aufweist, wie hier oben beschrieben (der sich beispielsweise zwischen den Brücken oder Stiften 26 erstrecken kann), wird erreicht, dass das Schraubelement 13 nach Abbruch des zusätzlichen Betätigungsabschnitts 25 einfach locker gedreht oder einigermaßen fest angedreht werden kann, soweit dies erforderlich scheint.

Jedes Spannelement 10 kann während des Einsatzes vergleichsweise fest und stufenlos angezogen werden, und zwar einfach durch Rotation des Schraubelements 13, wobei das Schraubelement 13 an die Verzahnung 12 der Spannachse 11 des Spannelements 10 angreift. Dazu braucht der Benutzer zum Erhalt der gewünschten festen Anspannung des Spannelements 10 nur relativ wenig Kraft auf das Schraubelement 13 auszuüben. Nach dem Festdrehen des Schraubelements 13 erzeugt dieses Schraubelement 13 automatisch eine geeignete, dauerhafte Sicherung der Spannachse 11, sodass eine Entspannung des Spannelements 10 erfolgreich entgegengetreten wird.

Vorzugsweise wird das erste Ende des Spannelements 10 während der Montage soweit über den Schlitz 21 der zugehörigen Spannachse 11 geschoben, dass das jeweilige Schraubelement 13 lediglich eine geringe Anzahl von Umdrehungen gedreht werden muss damit das Spannelement 10 straff um den jeweiligen Rahmenabschnitt F herum gespannt wird. Ein durch die Spannachse 11 geschobener, über den Spannmittelhalter 15 herausragender Abschnitt des Spannelements 10 kann soweit erwünscht abgeschnitten werden.

Vorzugsweise erstrecken sich die Spannmittel 11, 12, 13 im Wesentlichen in dem Spannmittelhalter 15 und / oder sind im Wesentlichen darin versenkt mit aufgenommen, wie bei dem vorliegenden Ausführungsbeispiel. Somit kann das System kompakt ausgebildet werden. Außerdem kann der Spannmittelhalter 15 einen Schutz im Bezug auf die Spannmittel 11, 12, 13 bilden. Wie in den Figuren dargestellt, sind die Spannmittel 11, 12, 13 nach der Montage außerdem vorzugsweise im Wesentlichen innerhalb der Innenkonturen der beiden gekrümmten Beine 3, 4 angeordnet. Somit kann das Schloss die Spannmittel 11, 12, 13 ebenfalls gegen beispielsweise eine Beschädigung schützen. Mit Rücksicht darauf, dass die Spannmittel 11, 12, 13 nicht oder nahezu nicht aus dem Schloss 1 herausragen, kann außerdem verhindert werden, dass beispielsweise ein Kleidungsstück eines Fahrradfahrers an die Spannmittel während des Einsatzes einhakt.

Das Ausführungsbeispiel kann beispielsweise einfach mit Hilfe von standardmäßig vorhandenen Werkzeugen an dem Fahrradrahmen F befestigt werden, ohne Einsatz von vergleichsweise komplexen Verbindungstechniken, wie beispielsweise das Schweißen. Außerdem kann das Schloss 1 mit Hilfe der genannten Befestigungsmittel 10-15 an unterschiedlichen Gabelabmessungen und Rohrdurchmessern eines Fahrrads montiert werden, mit standardmäßigen oder davon abweichenden Abmessungen, beispielsweise ohne Einsatz unterschiedlicher Übergangselemente. Damit wird ein sehr universell einsetzbares Schloss 1 erhalten. Außerdem ist eine mit Hilfe der Befestigungsmittel 10-15 gelieferte Schlossverbindung eventuell nachträglich einstellbar, soweit es die Kraft zur Befestigung betrifft. Außerdem können die Befestigungsmittel 10-15 das Schloss 1 fest oder lösbar mit dem Fahrradrahmen F verbinden. Außerdem braucht der Fahrradrahmen F keine speziellen Vorkehrungen aufzuweisen, zum Beispiel Büchsen, Montageöffnungen und dergleichen zur Montage des Schlosses 1. Durch Einsatz der genannten Spannelemente 10, insbesondere in Kombination mit den beschriebenen Spannmitteln 11 bis 15 kann eine große, stufenlose (und damit präzise) einstellbare Kraft zur Befestigung erhalten werden. Vorzugsweise sind die Spannelemente 10 deshalb aus rostfreiem Stahl gebildet. Außerdem kann das Schloss 1 vergleichsweise einfach vom Rahmen F entfernt werden, beispielsweise zwecks Wartungsarbeiten in einer Fahrradwerkstatt. Dazu können die Spannelemente 10 beispielsweise einfach durchgeschnitten werden.

Die Befestigungsmittel 10-15 des Ausführungsbeispiels erlauben eine relative schnelle und einfache Befestigung des Schlosses 1. Während der Montage können die Spannelemente 10 beispielsweise zunächst so weit wie möglich durch die Spannachsen 11 hindurch gezogen werden, sodass diese Elemente 10 bereits zu einem großen Anteil angezogen worden sind, wobei nachfolgend die Schraubelemente 13 beispielsweise zwei bis drei Umdrehungen angezogen werden zum Festklemmen des Schlosses 1 an dem Rahmen 11 und zur Sicherung der Spannachsen. Die gegebenenfalls vorgesehenen, zum Abbrechen vorgesehenen Hilfsenden 25 erlauben außerdem eine "foolproof"-Befestigung des Schlosses 1, wobei das Schloss mit einer ausreichend großen Kraft, jedoch einer nicht all zu großen Befestigungskraft an einem Rahmenabschnitt montiert werden kann. Auf diese Weise kann eine Beschädigung des Fahrradrahmens und / oder des Lacks noch besser vermieden werden. Zudem beanspruchen die Befestigungsmittel 10-15 vergleichsweise wenig Raum. Das System kann damit kompakt ausgebildet werden, wobei der Anziehmechanismus, jedenfalls die Spannmittel, beispielsweise im Wesentlichen innerhalb der gängigen Schlossgeometrie des Schlosses 1 angeordnet sein können.

Es spricht für sich, dass die Erfindung nicht auf die hier oben beschriebenen Ausführungsbeispiele beschränkt ist. Unterschiedliche Abänderungen sind innerhalb des Rahmens der Erfindung möglich, wie dargestellt in den nachfolgenden Ansprüchen. Es ist dabei vorstellbar, dass das Schloss auf unterschiedliche Arten ausgebildet ist. Die Befestigungsmittel können ebenfalls auf unterschiedliche Arten ausgebildet sein. So kann zum Beispiel eine Kappe oder dergleichen vorgesehen sein, die die Befestigungsmittel nach der Montage abdecken. Außerdem kann das genannte flexible Spannelement vorzugsweise eine Schlaufe bilden zum Angreifen an einem Rahmenabschnitt des Fahrrads, dies ist jedoch nicht notwendig. Ein genanntes Schraubelement kann außerdem auf unterschiedliche Arten ausgebildet sein.

## Patentansprüche

1. System, aufweisend ein Fahrradschloss (1) und Befestigungsmittel (10, 11, 12, 13, 15) zur Befestigung des Fahrradschlosses (1) mit einem Fahrradrahmen (F), wobei die Befestigungsmittel wenigstens ein flexibles Spannelement (10) umfassen, wobei die Befestigungsmittel Spannmittel (11, 12, 13) zum Spannen des genannten Spannelements (10) aufweisen, wobei die Spannmittel eine drehbare Spannachse (11) aufweisen, an der ein genanntes Spannelement (10) derart gekoppelt werden kann, dass das Spannelement (10) unter Einfluss der Rotation der Spannachse (11) unter Spannung gesetzt werden kann, wobei die Spannachse (11) eine Verzahnung (12) aufweist, **dadurch gekennzeichnet, dass** die Spannmittel ein zu betätigendes Schraubelement (13) aufweisen, das zwecks Rotation der Spannachse (11) in die Verzahnung (12) der Spannachse (11) eingreift.

2. System gemäß Anspruch 1, wobei ein Stirnende des Schraubelements (13) einen mit Hilfe eines Werkzeuges zu betätigenden Betätigungsabschnitt (13a, 25) aufweist, beispielsweise eine mit Hilfe eines Werkzeuges greifbare Betätigungsaussparung zur Betätigung des Schraubelementes (13).

3. System gemäß Anspruch 2, wobei der Betätigungsabschnitt (25) zum Abbrechen gebildet mit dem Schraubelement (13) verbunden ist, sodass dieser Betätigungsabschnitt (25) abbricht, wenn während der Spannungsbeaufschlagung des Spannelements (10) durch Betätigung des Schraubelements (13) eine vorab festgelegte Spannkraft überschritten wird.

4. System gemäß einem der vorangegangenen Ansprüche, wobei die Befestigungsmittel wenigstens einen die genannten Spannmittel (11, 12, 13) haltenden Spannmittelhalter (15) aufweisen.

5. System gemäß Anspruch 4, wobei die Spannmittel (11, 12, 13) sich im Wesentlichen in dem Spannmittelhalter (15) erstrecken und / oder im Wesentlichen versenkt aufgenommen sind.

6. System gemäß Anspruch 4 oder 5, wobei jeder Spannmittelhalter (15) - nach der Montage - an einer von dem Fahrradrahmen (F) entfernten Seite des Schlosses (1) angeordnet ist.

7. System gemäß Anspruch 5, wobei das Schloss (1) wenigstens eine Durchführung / Durchgang (8) aufweist, die nach der Montage zumindest dazu vorgesehen ist, ausgehend von dem Spannmittelhalter (15) ein genanntes Spannelement (10) zum Fahrradrahmen (F) zu leiten.

8. System gemäß einem der Ansprüche 4 bis 7, wobei das Schloss (1) wenigstens eine Aussparung oder Vertiefung (9) umfasst, in der ein genannter Spannmittelhalter (15) mit vergleichsweise wenig Spielraum und / oder wenigstens einigermaßen versenkt angeordnet werden kann.

9. System gemäß einem der vorangegangenen Ansprüche, wobei das Schloss zum Blockieren eines Laufrades eines Fahrrads konfiguriert wird, nachdem das Schloss mit Hilfe der Befestigungsmittel mit dem Fahrradrahmen des Fahrrads verbunden wird.

10. System gemäß einem der vorangegangenen Ansprüche, wobei das Schloss ein Ringschlosstyp ist, das ein Gehäuse (2) umfasst mit zwei gekrümmten Beinen (3, 4), die einen Riegelführungsraum umgeben, und das einen zu betätigenden Riegelbügel (5) aufweist, der aus dem Riegelführungsraum geschoben werden kann und in umgekehrter Richtung zum Blockieren einer Verriegelungsaussparung beziehungsweise zur Freigabe.

11. System gemäß Anspruch 10, wobei eine virtuelle Drehachse des genannten Schraubelements im Wesentlichen parallel zu einer virtuellen Drehachse, um die der Riegelbügel verschoben werden kann, angeordnet ist.

12. System gemäß Anspruch 10 oder 11, wobei an zueinander gerichteten Seiten der gekrümmten Beine (3, 4) Flanschen (7) vorgesehen sind, wobei die genannten Flanschen genannte Befestigungsmittel (10, 11, 12, 13, 15) aufweisen.

13. System gemäß Anspruch 12, wobei jeder genannte Flansch (7) wenigstens einen Durchgang aufweist, wobei jedes genannte Spannelement (10) nach der Montage durch wenigstens einen Durchgang (8) des genannten Flansches (7) geführt ist.

14. System gemäß einem der Ansprüche 10 bis 13, wobei die Spannmittel (11, 12, 13) nach der Montage im Wesentlichen innerhalb der Innenkonturen der beiden gekrümmten Beine (3, 4) angeordnet sind.

15. System gemäß einem der vorangegangenen Ansprüche, aufweisend wenigstens zwei Spannelemente (10), die konfiguriert sind zur Kopplung de Schlosses (1) oder Abschnitte des Schlosses an wenigstens zwei sich im Abstand zueinander erstreckenden Rahmenabschnitten (F) eines Fahrradrahmens, wobei die Rahmenabschnitte (F) beispielsweise die Beine einer Gabel umfassen.

16. System gemäß einem der vorangegangenen Ansprüche, wobei jedes Spannelement (10) einen länglichen, dünnen Spannstreifen (10) umfasst.

17. System gemäß einem der vorangegangenen Ansprüche, wobei eine Drehachse des genannten Schaubenelements sich quer erstreckt relativ zu einer Drehachse der Spannachse, worauf das Schraubelement angreift.

18. System gemäß einem der vorangegangenen Ansprüche, wobei jedes Spannelement relativ dehnungsunempfindlich und / oder kriechunempfindlich ausgebildet ist, wobei jedes Spannelement vorzugsweise Metall, eine Legierung oder rostfreien Stahl aufweist.

19. System gemäß einem der vorangegangenen Ansprüche, wobei das flexible Spannelement (10) eine nicht in sich geschlossene Schlaufe umfasst.

20. System gemäß einem der vorangegangenen Ansprüche, wobei ein Rahmenabschnitt (F) nach der Montage lediglich zum Teil von dem Spannelement umgriffen wird, jedenfalls beobachtet in Umfangsrichtung des Rahmenabschnittes (F).

21. Fahrrad aufweisend wenigstens ein System gemäß einem der vorangegangenen Ansprüche, wobei das Fahrradschloss (1) des Systems mit Hilfe des genannten Spannelements (10) mit einem Fahrradrahmen (F) des Fahrrads verbunden ist.

22. Fahrrad gemäß Anspruch 21, wobei das Fahrradschloss (1) mittels wenigstens zweier genannten Spannelemente (10) an zwei Beinen einer Gabel des Fahrrads verbunden ist.

23. Befestigungsmittel eines Systems gemäß einem der vorangegangenen Ansprüche 1 bis 20, wobei die Befestigungsmittel zur Befestigung des Fahrradschlosses an dem Fahrradrahmen (F) spezifisch ausgebildet sind.

24. Verfahren zur Befestigung eines Fahrradschlosses an einem Fahrradrahmen, wobei das Fahrradschloss (1) mit Hilfe wenigstens eines flexiblen Spannelements (10) verbunden wird mit dem Fahrradrahmen (F), wobei das Spannelement (10) durch Betätigung eines Schraubelements, das angreift an die Verzahnung (12) einer mit dem Spannelement gekoppelten Spannachse (11) angreift, unter Spannung gesetzt und gesichert wird.

## Claims

1. System, comprising a cycle lock (1) and attachment means (10, 11, 12, 13, 15) for attaching the cycle lock (1) to a cycle frame (F), wherein the attachment means comprise at least one flexible clamp element (10), wherein the attachment means comprise clamping means (11, 12, 13) for clamping the named clamp element (10), wherein the clamping means provide a rotatable clamping axle (11), to which a named clamp element (10) can be coupled in such a manner, that the clamp element (10) can be placed under tension subject to the influence of the rotation of the clamping axle (11), and wherein the clamping axle (11) provides a gearing (12),
**characterised in that**
the clamping means provides an actuatable screw element (13), which engages with the gearing (12) of the clamping axle (11) for the purpose of rotating the clamping axle (11).

2. System according to claim 1, wherein an end-face of the screw element (13) provides an actuation portion (13a, 25) to be actuated using a tool, for example, an actuation recess for actuating the screw element (13), which can be gripped by means of a tool.

3. System according to claim 2, wherein the actuation portion (25) is connected to the screw a element (13) being formed in such a manner that it can be broken off, so that the latter actuation portion (25) breaks off, if a previously-defined clamping force is exceeded by the actuation of the screw element (13) during the tensioning of the clamp element (10).

4. System according to any one of the preceding claims, wherein the attachment means provide at least one clamp holder (15) holding the named clamping means (11, 12, 13).

5. System according to claim 4, wherein the clamping means (11, 12, 13) extend substantially within the clamp holder (15) and/or are accommodated in a substantially flush-countersunk manner.

6. System according to claim 4 or 5, wherein, after assembly, each clamp holder (15) is disposed at a side of the lock (1) remote from the cycle frame (F).

7. System according to claim 5, wherein the lock (1) comprises at least one through passage/through opening (8), which is provided at least in order to guide a named clamp element (10), after assembly, starting from the clamp holder (15) towards the cycle frame (F).

8. System according to any one of claims 4 to 7, wherein the lock (1) comprises at least one recess or indentation (9), in which a named clamp holder (15) can be arranged with comparatively little play and/or flush-countersunk at least to some extent.

9. System according to any one of the preceding claims, wherein the lock is configured in order to block a running wheel of a cycle after the lock is connected to the cycle frame of the cycle by the attachment means.

10. System according to any one of the preceding claims, wherein the lock is a ring-lock type, which comprises a housing (2) with two curved legs (3, 4), which enclose a bolt-guiding chamber, and which comprises an actuatable bolt shackle (5), which can be extended from the bolt-guiding chamber in order to block or respectively release a locking recess.

11. System according to claim 10, wherein a virtual rotational axis of the named screw element is disposed substantially parallel to a virtual rotational axis, about which the bolt shackle can be displaced.

12. System according to claim 10 or 11, wherein flanges (7) are provided on mutually-facing sides of the curved legs (3, 4), wherein the named flanges provide named attachment means (10, 11, 12, 13, 15).

13. System according to claim 12, wherein each named flange (7) provides at least one through passage, wherein, after assembly, each named clamp element (10) is guided through at least one through passage (8) of the named flange (7).

14. System according to any one of claims 10 to 13, wherein the clamping means (11, 12, 13) are arranged substantially within the internal contours of the two curved legs (3, 4).

15. System according to any one of the preceding claims, providing at least two clamp elements (10), which are configured, in order to attach the lock (1) or portions of the lock to at least two frame portions (F) of a cycle frame, extending at a distance relative to one another, wherein the frame portions (F) comprise, for example, the legs of a fork.

16. System according to any one of the preceding claims, wherein each clamp element (10) comprises a thin, elongated clamping strip (10).

17. System according to any one of the preceding claims, wherein a rotational axis of the named screw element extends transversely relative to a rotational axis of the clamping axle, with which the screw element engages.

18. System according to any one of the preceding claims, wherein each clamp element is designed to be relatively insensitive to stretching and/or creep, wherein each clamp element preferably comprises a metal, an alloy or stainless steel.

19. System according to any one of the preceding claims, wherein the flexible clamp element (10) comprises a loop, which is not closed.

20. System according to any one of the preceding claims, wherein, after assembly, a frame portion (F) is only partially enclosed by the clamp element, in any case, observed in the circumferential direction of the frame portion (F).

21. Cycle comprising at least one system according to any one of the preceding claims, wherein the cycle lock (1) of the system is connected to a cycle frame (F) of the cycle using the named clamp element (10).

22. Cycle according to claim 21, wherein the cycle lock (1) is connected by means of at least two named clamp elements (10) to two legs of a fork of the cycle.

23. Attachment means of a system according to any one of the preceding claims 1 to 20, wherein the attachment means is specifically designed for the attachment of the cycle lock to the cycle frame (F).

24. Method of attaching a cycle lock to a cycle frame, wherein the cycle lock (1) is connected to the cycle frame (F) using at least one flexible clamp element (10), wherein the clamp element (10) is placed under tension and secured by actuating a screw element, which engages with the gearing (12) of a clamping axle (11) coupled with the clamp element.

## Revendications

1. Système comportant un antivol (1) pour bicyclette et des moyens de fixation (10, 11, 12, 13, 15) pour fixer l'antivol (1) à un cadre de bicyclette (F), les moyens de fixation comportant au moins un élément de serrage (10) flexible, les moyens de fixation comportant des moyens de serrage (11, 12, 13) pour serrer ledit élément de serrage (10), les moyens de serrage comportant un pivot de serrage (11) rotatif, contre lequel peut être couplé ledit élément de serrage (10), de telle sorte que l'élément de serrage (10) peut être mis sous tension sous l'effet de la rotation du pivot de serrage (11), le pivot de serrage (11) comportant une dentelure (12), **caractérisé en ce que** les moyens de serrage comportent un élément de vissage (13) à manoeuvrer, qui engrène avec la denture (12) du pivot de serrage (11) en vue de faire tourner le pivot de serrage (11).

2. Système selon la revendication 1, dans lequel une extrémité frontale de l'élément de vissage (13) comporte une partie d'actionnement (13a, 25) à manoeuvrer au moyen d'un outil, par exemple un évidement d'actionnement dans lequel peut s'engager un outil en vue de manoeuvrer l'élément de vissage (13).

3. Système selon la revendication 2, dans lequel la partie d'actionnement (25) est reliée à l'élément de vissage (13) en étant formée pour se rompre, de telle sorte que cette partie d'actionnement (25) se rompt lorsqu'une force de serrage, supérieure à une force de serrage définie au préalable, se produit pendant une sollicitation en tension de l'élément de serrage (10) sous l'effet de l'actionnement de l'élément de vissage (13).

4. Système selon l'une quelconque des revendications précédentes, dans lequel les moyens de fixation comportent au moins un support des moyens de serrage (15), qui maintient lesdits moyens de serrage (11, 12, 13).

5. Système selon la revendication 4, dans lequel les moyens de serrage (11, 12, 13) s'étendent sensiblement dans le support des moyens de serrage (15) et/ou sont reçus sensiblement en profondeur dans celui-ci.

6. Système selon la revendication 4 ou 5, dans lequel chaque support des moyens de serrage (15) - après montage - est disposé sur un côté de l'antivol (1), éloigné du cadre de bicyclette (F).

7. Système selon la revendication 5, dans lequel l'antivol (1) comporte au moins une traversée ou passage (8) qui, après le montage, est au moins prévu pour guider un dit élément de serrage (10) depuis le support des moyens de serrage (15) vers le cadre de bicyclette (F).

8. Système selon l'une quelconque des revendications 4 à 7, dans lequel l'antivol (1) comporte au moins un évidement ou creux (9), dans lequel un dit support des moyens de serrage (15) peut être disposé avec un jeu relativement faible et/ou au moins à peu près en profondeur.

9. Système selon l'une quelconque des revendications précédentes, dans lequel l'antivol est configuré pour bloquer une roue d'une bicyclette une fois que l'antivol est relié au cadre de la bicyclette par l'intermédiaire des moyens de fixation.

10. Système selon l'une quelconque des revendications précédentes, dans lequel l'antivol est un antivol de type annulaire, lequel comporte un boîtier (2) avec deux bras (3, 4) courbes, qui entourent un espace de guidage d'un verrou, et lequel comporte un étrier de verrouillage (5) à manoeuvrer, qui peut coulisser hors de l'espace de guidage d'un verrou et dans le sens opposé, en vue de bloquer un évidement de verrouillage ou de le libérer.

11. Système selon la revendication 10, dans lequel un axe de rotation virtuel dudit élément de vissage est orienté sensiblement parallèlement à un axe de rotation virtuel autour duquel peut se déplacer l'étrier de verrouillage.

12. Système selon la revendication 10 ou 11, dans lequel des brides (7) sont prévues sur des côtés orientés l'un vers l'autre des bras (3, 4) courbes, lesdites brides (7) comportant lesdits moyens de fixation (10, 11, 12, 13, 15).

13. Système selon la revendication 12, dans lequel chacune desdites brides (7) comporte au moins un passage, chacun desdits éléments de serrage (10) étant guidé, après le montage, à travers au moins un passage (8) de ladite bride (7).

14. Système selon l'une quelconque des revendications 10 à 13, dans lequel les moyens de serrage (11, 12, 13) sont disposés après le montage sensiblement à l'intérieur des contours intérieurs des deux bras (3, 4) courbes.

15. Système selon l'une quelconque des revendications précédentes, comportant au moins deux éléments de serrage (10) qui sont configurés pour coupler l'antivol (1) ou des parties de l'antivol contre au moins deux parties de cadre (F), situées mutuellement à distance, sur un cadre de bicyclette, les parties de cadre (F) entourant au moins les bras d'une fourche.

16. Système selon l'une quelconque des revendications précédentes, dans lequel chaque élément de serrage (10) comporte une mince bande de serrage (10) allongée.

17. Système selon l'une quelconque des revendications précédentes, dans lequel un axe de rotation dudit élément de vissage s'étend transversalement par rapport à un axe de rotation du pivot de serrage, avec lequel l'élément de vissage entre en prise.

18. Système selon l'une quelconque des revendications précédentes, dans lequel chaque élément de serrage est réalisé de manière relativement sensible à l'allongement et/ou sensible au glissement, chaque élément de serrage étant réalisé de préférence en métal, dans un alliage ou en acier inoxydable.

19. Système selon l'une quelconque des revendications précédentes, dans lequel l'élément de serrage (10) flexible forme une boucle non fermée en principe.

20. Système selon l'une quelconque des revendications précédentes, dans lequel une partie de cadre (F) est entourée, après le montage, seulement en partie par l'élément de serrage, en tout cas par référence au sens périphérique de la partie de cadre (F).

21. Bicyclette comportant au moins un système selon l'une quelconque des revendications précédentes, dans laquelle l'antivol (1) du système est relié à un cadre (F) de la bicyclette au moyen dudit élément de serrage (10).

22. Bicyclette selon la revendication 21, dans laquelle l'antivol (1) de la bicyclette est relié à deux bras d'une fourche de la bicyclette au moyen d'au moins deux des dits éléments de serrage (10).

23. Moyen de fixation d'un système selon l'une quelconque des revendications 1 à 20, dans lequel les moyens de fixation sont réalisés spécifiquement pour la fixation de l'antivol (1) contre le cadre de bicyclette (F).

24. Procédé de fixation d'un antivol contre un cadre de bicyclette, dans lequel l'antivol (1) est relié au cadre de bicyclette (F) au moyen d'au moins un élément de serrage (10) flexible, l'élément de serrage (10) étant mis sous tension et bloqué sous l'effet de la manoeuvre d'un élément de vissage (13), qui engrène avec la denture (12) d'un pivot de serrage (11) couplé à l'élément de serrage (10).
